# EUROPÄISCHE PATENTSCHRIFT

(11) **EP 0 802 088 B1**
(45) Veröffentlichungstag und Bekanntmachung des Hinweises auf die Patenterteilung: **12.12.2001**
(21) Anmeldenummer: 97104056.3
(22) Anmeldetag: 11.03.1997
(51) Int. Cl.: B60R 21/20

(54) **Gassack-Modul für ein Fahrzeug**
Vehicle airbag module
Module de coussin gonflable pour un véhicule

(30) Priorität: 15.04.1996 DE 29606724 U
(43) Veröffentlichungstag der Anmeldung: 22.10.1997
(73) Patentinhaber: TRW Occupant Restraint Systems GmbH & Co. KG, 73551 Alfdorf (DE)
(72) Erfinder: Acker, Dominique, 73553 Alfdorf (DE)
(74) Vertreter: Degwert, Hartmut, Dipl.-Phys.

(56) Entgegenhaltungen:
- EP-A- 0 668 196
- EP-A- 0 680 851

## Beschreibung

Die Erfindung betrifft einen Gassack-Modul für ein Fahrzeug. Ein solcher Modul besteht allgemein aus einer Druckgasquelle und einem mit dieser in Strömungsverbindung stehenden Gassack. Wenn eine geeignete Auslösesensorik feststellt, daß aufgrund der auftretenden Fahrzeugverzögerungen ein Aktivieren des Gassack-Moduls zu erfolgen hat, wird das Druckgas der Druckgasquelle freigegeben, das den Gassack entfaltet, so daß dieser eine Schutzfunktion für einen Fahrzeuginsassen bereitstellen kann. Als Druckgasquelle werden vermehrt allgemein rohrförmige Gasgeneratoren verwendet, die in der Nähe eines axialen Endes mit mehreren Ausströmöffnungen versehen sind; vorzugsweise werden zwei einander diametral gegenüberliegende Ausströmöffnungen verwendet, durch die nach Aktivierung der Druckgasquelle das Druckgas ausströmt. Solche Generatoren haben üblicherweise einen Durchmesser von etwa 30 mm; je nach der für die jeweilige Anwendung gewünschten Leistung werden Druckgasquellen mit verschiedenen Längen verwendet. Um das Druckgas von den Ausströmöffnungen in den Gassack zu leiten, werden Führungen benötigt, die den Gasgeneratorkörper in radialem Abstand umgeben. Durch diese Führungen wird die Breite des Gassack-Moduls insgesamt bestimmt. Aus EP-A-0 668 196 ist ein Modul gemäß dem Oberbegriff des Anspruchs 1 bekannt.

Aufgabe der Erfindung ist es, einen kostengünstigen und besonders kompakten Gassack-Modul zu schaffen, dessen Breite kaum größer ist als der Durchmesser des Gasgeneratorkörpers.

Diese Aufgabe wird gemäß der Erfindung durch einen GassackModul mit den Merkmalen des Anspruchs 1 gelöst. Dabei besteht der Modul aus einer allgemein rohrförmigen Druckgasquelle, die an einem axialen Ende in ihrer Mantelfläche mehrere Ausströmöffnungen für das Druckgas aufweist, einem langgestreckten Befestigungsstreifen mit einer Durchströmöffnung an einem axialen Ende und zwei schellenartigen Klemmabschnitten, von denen einer im Bereich der Durchströmöffnung angeordnet ist und in denen die Druckgasquelle so festgespannt ist, daß eine Ausströmöffnung gegenüber der Durchströmöffnung liegt und alle anderen durch den schellenartigen Befestigungsabschnitt verschlossen sind, einem zusammengefalteten Gassack, der über die Durchströmöffnung mit der Druckgasquelle in Strömungsverbindung steht und durch das Druckgas entfaltet werden kann, und einem langgestreckten Befestigungsrahmen, der im Inneren des Gassacks angeordnet und mit dem Befestigungsstreifen verbunden ist, wobei der Gassack zwischen dem Befestigungsstreifen und dem Befestigungsrahmen festgelegt ist. Ein solcher Gassack-Modul zeichnet sich durch eine besonders gute Raumausnutzung aus. Die maximale Breite des Moduls ist im wesentlichen bestimmt durch den Durchmesser der Druckgasquelle plus der zweifachen Wandstärke des Materials der Klemmabschnitte. Die besonders kompakte Gestaltung ist durch die Erkenntnis möglich, daß für ein ordnungsgemäßes Entfalten des Gassacks nicht alle Ausströmöffnungen der Druckgasquelle notwendig sind, sondern daß sich ein ausreichend schnelles Entfalten auch mit einer einzigen Ausströmöffnung erzielen läßt, die dem Gassack direkt zugewandt ist, so daß sich geringe Strömungsverluste ergeben. Der erfindungsgemäße Gassack-Modul kann besonders leicht an Druckgasquellen verschiedener Leistung angepaßt werden, da sowohl lange als auch kurze Druckgasquellen in sicherer Weise in den Klemmabschnitten eingespannt werden können.

Vorteilhafte Ausführungsformen der Erfindung sind in den Unteransprüchen gegeben.

Die Erfindung wird nachfolgend unter Bezugnahme auf eine bevorzugte Ausführungsform beschrieben, die in der Zeichnung dargestellt ist. In dieser zeigen:
- Fig. 1: eine schematische, teilgeschnittene Seitenansicht eines erfindungsgemäßen Gassack-Moduls;
- Fig. 2: eine schematische Draufsicht auf den Gassack-Modul von Fig. 1;
- Fig. 3: einen Schnitt entlang der Linie III-III von Fig. 1;
- Fig. 4: einen Schnitt entlang der Linie IV-IV von Fig. 1;
- Fig. 5: einen Schnitt entlang der Linie V-V von Fig. 1;
- Fig. 6: eine schematische Seitenansicht eines bei dem Gassack-Modul von Fig. 1 verwendeten Befestigungsstreifens; und
- Fig. 7: eine schematische Seitenansicht eines bei dem Gassack-Modul von Fig. 1 verwendeten Befestigungsrahmens.

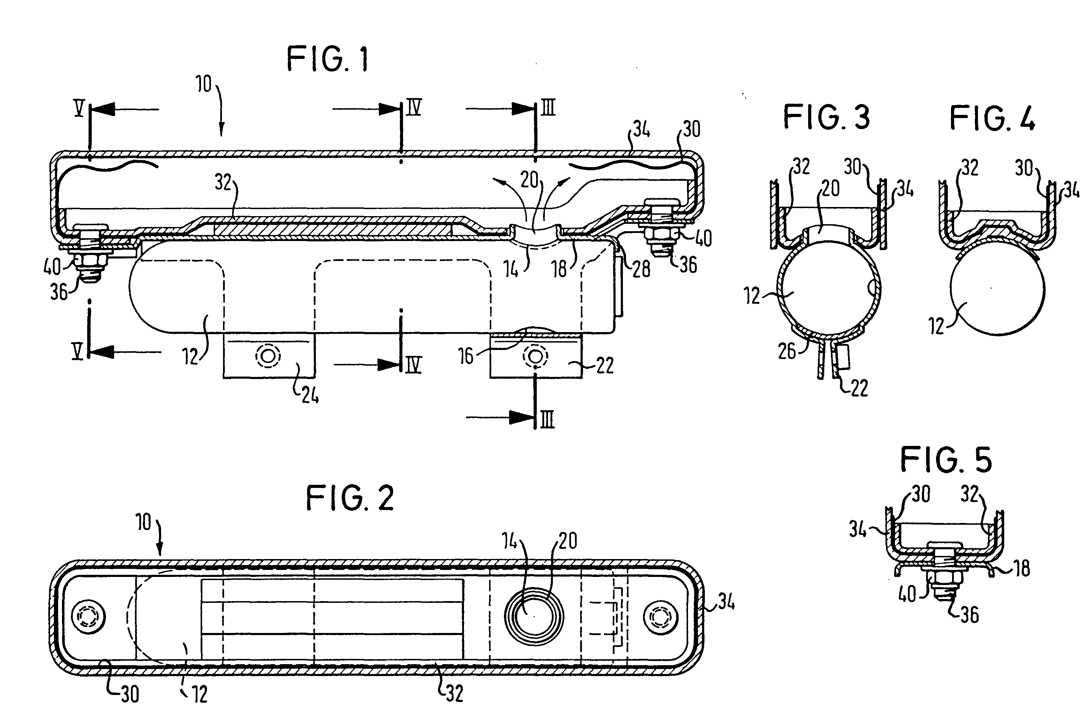

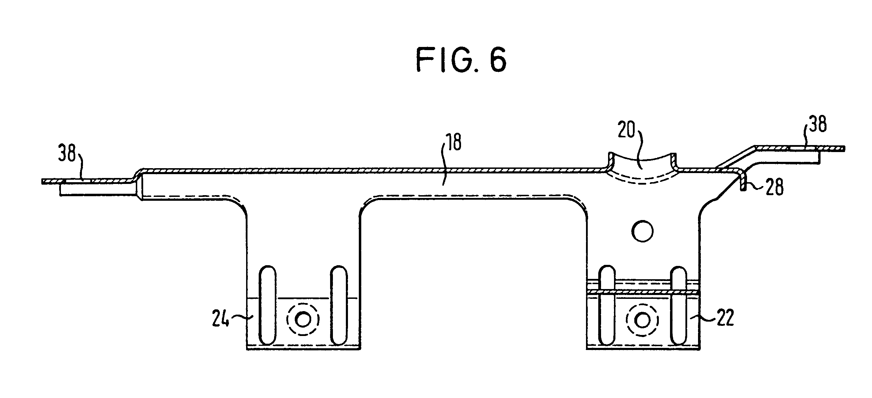

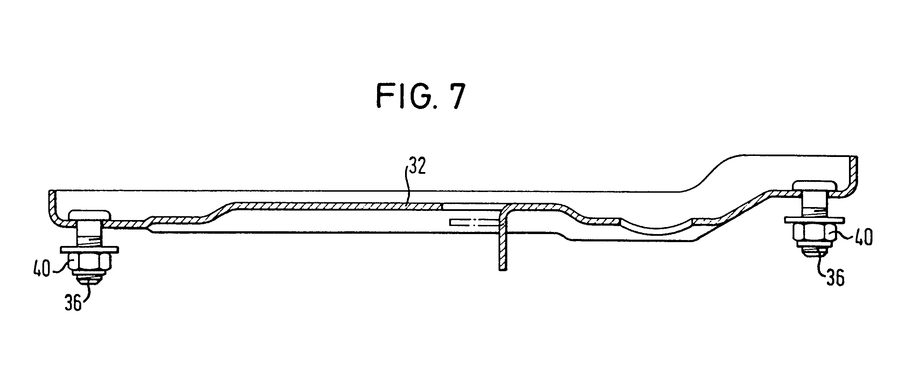

In den Figuren 1 bis 7 ist eine bevorzugte Ausführungsform eines erfindungsgemäßen Gassack-Moduls 10 für ein Fahrzeug dargestellt. Der Gassack-Modul 10 enthält eine allgemein rohrförmige Druckgasquelle 12, die an einem axialen Ende mit zwei Ausströmöffnungen 14 und 16 versehen ist, die in der Mantelfläche der Druckgasquelle 12 angeordnet sind. Die Druckgasquelle 12 ist an einem langgestreckten Befestigungsstreifen 18 befestigt, der an einem axialen Ende mit einer Durchströmöffnung 20 versehen ist, die von einem zylindrischen Fortsatz umgeben ist. Der Befestigungsstreifen 18 weist für die Befestigung der Druckgasquelle 12 zwei schellenartige Klemmabschnitte 22, 24 auf, von denen einer, nämlich der Klemmabschnitt 22, im Bereich der Durchströmöffnung 20 angeordnet ist, während der andere Klemmabschnitt 24 näher an dem anderen axialen Ende des Befestigungsstreifens 18 angeordnet ist. Der Klemmabschnitt 22 ist außerdem im Bereich des Klemmspaltes mit einem Abdeckblech 26 versehen. Die Druckgasquelle 12 ist so in den beiden schellenartigen Klemmabschnitten 22, 24 eingespannt, daß die Ausströmöffnung 14 gegenüber der Durchströmöffnung 20 liegt, während die Ausströmöffnung 16 von dem Abdeckblech 26 verschlossen ist. Zur Erleichterung der Montage der Druckgasquelle 12 ist an dem Befestigungsstreifen 18 ein Anschlagblech 28 ausgebildet, das einen axialen Anschlag für die Druckgasquelle 12 bildet. Der Befestigungsstreifen 18 zusammen mit der an diesem befestigten Druckgasquelle 12 bildet eine erste vormontierte Baugruppe.

Mit dieser ersten Baugruppe ist eine zweite vormontierte Baugruppe verbunden, die aus einem Gassack 30, einem im Inneren des Gassacks angeordneten, langgestreckten Befestigungsrahmen 32 und einer Gassack-Abdeckung 34 besteht. Der im Inneren des Gassacks 30 angeordnete Befestigungsrahmen weist eine zu dem zylindrischen Fortsatz an dem Befestigungsstreifen komplementäre Öffnung auf und ist mit Bolzen 36 versehen, die an dem Befestigungsrahmen 32 festgelegt sind und Halteöffnungen des Gassacks 30 durchqueren. Der Gassack 30 ist auf dem Befestigungsrahmen 32 zusammengefaltet, so daß die Breite der zweiten Baugruppe im wesentlichen der Breite der ersten Baugruppe entspricht. Auf den zusammengefalteten Gassack ist die Gassack-Abdeckung 34 aufgesetzt, die mit Fixierungsöffnungen versehen ist, die ebenfalls von den Bolzen 36 durchquert werden. Somit sind der Gassack 30, der Befestigungsrahmen 32 und die Gassack-Abdeckung 34 relativ zueinander durch die Bolzen 36 als die zweite vormontierte Baugruppe fixiert.

Die beiden Baugruppen werden miteinander verbunden, indem die zweite Baugruppe so auf die erste Baugruppe aufgesetzt wird, daß die Bolzen 36 durch zugeordnete Öffnungen 38 des Befestigungsstreifens 18 hindurchgesteckt werden. Das Eingreifen des zylindrischen Fortsatzes des Befestigungsstreifens in die komplementäre Öffnung des Befestigungsrahmens unterstützt die Fixierung der beiden Baugruppen relativ zueinander. Dann können auf die Bolzen 36 geeignete (nicht dargestellte) Montagewinkel aufgesetzt werden, mit denen der Gassack-Modul 10 an dem Fahrzeug befestigt werden kann. Schließlich werden auf die Bolzen 36 geeignete Muttern 40 aufgeschraubt, um die erste Baugruppe fest mit der zweiten zu verbinden und durch eine Klemmwirkung zwischen dem Befestigungsrahmen 32 und dem Befestigungsstreifen 18 die Gassack-Abdeckung 34 und den Gassack 30 (und möglicherweise die Montagewinkel) festzulegen.

Die Funktionsweise des erfindungsgemäßen Gassack-Moduls ist die folgende: Bei Aktivierung der Druckgasquelle durch eine (nicht dargestellte) Auslösesensorik strömt das in der Druckgasquelle 12 enthaltene Druckgas nur aus der Ausströmöffnung 14 aus, da die Ausströmöffnung 16 durch das Abdeckblech 26 verschlossen ist. Der Gassack 30 wird aufgeblasen und entfaltet, wobei zu Beginn des Entfaltungsvorganges die Gassack-Abdeckung 34 aufgerissen wird.

Durch die erfindungsgemäße Ausgestaltung ergeben sich die folgenden Vorteile: Der erfindungsgemäße Gassack-Modul ist besonders kompakt, da die Breite des Moduls den Durchmesser der Druckgasquelle 12 plus die doppelte Wandstärke der Klemmabschnitte im wesentlichen nicht überschreitet. Der Gassack-Modul kann leicht an Druckgasquellen verschiedener Leistung angepaßt werden, da Druckgasquellen annähernd beliebiger Länge eingesetzt werden können, ohne daß dafür der Befestigungsstreifen 18 modifiziert werden muß. Der Gassack-Modul kann aus zwei vormontierten Baugruppen bestehen, wodurch sich eine besondere Flexibilität bei der Montage ergibt. Durch die in leichter Weise an den Bolzen anbringbaren Montagewinkel kann der erfindungsgemäße Gassack-Modul besonders einfach an die jeweiligen Einbauverhältnisse in dem gewünschten Fahrzeug angepaßt werden. Durch die Verminderung des Materialaufwandes für den Befestigungsstreifen 18 auf das konstruktiv notwendige Mindestmaß, also einen langgestreckten Streifen und zwei schellenartige Klemmabschnitte, ergibt sich ein besonders geringes Gewicht des erfindungsgemäßen Gassack-Moduls. Weiterhin ergibt sich eine sehr große Flexibilität hinsichtlich der verwendbaren Gassäcke und der Gassack-Abdeckungen, die in besonders einfacher Weise durch eine Klemmwirkung zwischen dem Befestigungsrahmen 32 und dem Befestigungsstreifen 18 festgelegt werden. Schließlich ist der erfindungsgemäße Gassack-Modul leicht zu demontieren, was Vorteile bei einer eventuellen Wiederverwertung von einzelnen Bestandteilen bietet.

## Patentansprüche

1. Gassack-Modul (10) für ein Fahrzeug, mit
einer allgemein rohrförmigen Druckgasquelle (12), die an einem axialen Ende in ihrer Mantelfläche mehrere Ausströmöffnungen (14, 16) für das Druckgas aufweist,
einem langgestreckten Befestigungsstreifen (18) mit einer Durchströmöffnung (20) an einem axialen Ende und zwei Klemmabschnitten (22, 24), von denen der eine (22) im Bereich der Durchströmöffnung (20) angeordnet ist und in denen die Druckgasquelle (12) so festgespannt ist, daß eine Ausströmöffnung (14) der Durchströmöffnung (20) zugewandt ist,
einem zusammengefalteten Gassack (30), der über die Durchströmöffnung (20) mit der Druckgasquelle (12) in Strömungsverbindung steht und durch das Druckgas entfaltet werden kann,
und einem langgestreckten Befestigungsrahmen (32), der im Inneren des Gassacks (30) angeordnet und mit dem Befestigungsstreifen (18) verbunden ist, **dadurch gekennzeichnet, daß** die beiden klemmabschnitte (22,24) schellenartig ausgebildet und alle anderen Ausströmoffnungen durch den schellenartigen Klemmabschnitt (22) verschlossen sind.

2. Gassack-Modul nach Anspruch 1, **dadurch gekennzeichnet, daß** der Befestigungsrahmen (32) und der gefaltete Gassack (30) eine vormontierte Baugruppe bilden.

3. Gassack-Modul nach einem der Ansprüche 1 und 2, **dadurch gekennzeichnet, daß** die Druckgasquelle (12) und der Befestigungsstreifen (18) eine vormontierte Baugruppe bilden.

4. Gassack-Modul nach einem der vorhergehenden Ansprüche, **dadurch gekennzeichnet, daß** der Befestigungrahmen (32) mit dem Befestigungsstreifen (18) durch Bolzen (36) verbunden ist, die an dem Befestigungsrahmen (32) festgelegt sind und Halteöffnungen des Gassacks (30) durchqueren, und daß der Gassack (30) zwischen dem Befestigungsstreifen (18) und dem Befestigungsrahmen (32) festgelegt ist.

5. Gassack-Modul nach Anspruch 4, **gekennzeichnet durch** eine Gassack-Abdeckung (34), die mit Fixierungsöffnungen versehen ist, die von den Bolzen (36) durchquert werden.

6. Gassack-Modul nach einem der Ansprüche 4 und 5, **dadurch gekennzeichnet, daß** auf die Bolzen (36) Montagewinkel aufgesetzt sind, mit denen das Modul (10) an dem Fahrzeug befestigt werden kann.

## Claims

1. A gas bag module (10) for a vehicle, comprising
an essentially tubular pressurized gas source (12) provided with several discharge ports (14, 16) for the pressurized gas in its peripheral surface at one axial end,
an elongated attachment strip (18) with a flow-through port (20) at one axial end and two clamping sections (22, 24), the one (22) of which is located in the region of the flow-through port (20) and in which the pressurized gas source (12) is clamped in such a way that one discharge port (14) is faced towards the flow-through port (20),
a folded gas bag (30) which is in fluid communication with the pressurized gas source (12) via the flow-through port (20) and which can be unfolded by the pressurized gas,
and an elongated attachment frame (32) which is located in the interior of the gas bag (30) and which is connected to the attachment strip (18), **characterized in that** the two clamping sections (22, 24) have a clip-type configuration and all other flow-through ports are sealed by the clip-type clamping section (22).

2. The gas bag module in accordance with claim 1, **characterized in that** the attachment frame (32) and the folded gas bag (30) form a preassembled unit.

3. The gas bag module in accordance with either one of claims 1 and 2, **characterized in that** the pressurized gas source (12) and the attachment strip (18) form a preassembled unit.

4. The gas bag module in accordance with any one of the preceding claims, **characterized in that** the attachment frame (32) is connected to the attachment strip (18) by means of bolts (36) which are secured to the attachment frame (32) and pass through retaining openings of the gas bag (30), and that the gas bag (30) is fixed between the attachment strip (18) and the attachment frame (32).

5. The gas bag module in accordance with claim 4, **characterized by** a gas bag cover (34) which is provided with fixing openings which are passed through by the bolts (36).

6. The gas bag module in accordance with either one of claims 4 and 5, **characterized in that** mounting brackets with which the module (10) can be fastened to the vehicle are placed on the bolts (36).

## Revendications

1. Module de coussin à gaz (10) pour un véhicule, comprenant
une source de gaz comprimé (12) de forme générale tubulaire comportant, à une extrémité axiale, plusieurs orifices de sortie (14, 16) pour le gaz comprimé, ménagés dans sa surface enveloppe,
une bande de fixation allongée (18) pourvue d'un orifice de passage d'écoulement (20) à une extrémité axiale et deux portions de serrage (22, 24) dont l'une est agencée dans la zone de l'orifice de passage d'écoulement (20) et dans lesquelles la source de gaz comprimé (12) est immobilisée par serrage de telle sorte qu'un orifice de sortie (14) est tourné vers l'orifice de passage d'écoulement (20),
un coussin à gaz replié (30) qui est en communication fluidique avec la source de gaz comprimé (12) par l'intermédiaire de l'orifice de passage d'écoulement (20) et qui peut être déployé par le gaz comprimé, et
un cadre de fixation allongé (32) qui est agencé à l'intérieur du coussin à gaz (30) et est relié à la bande de fixation (18), **caractérisé en ce que** les deux portions de serrage (22, 24) sont réalisées en forme de colliers et tous les autres orifices de sortie sont fermés par la portion de serrage (22) en forme de collier.

2. Module de coussin à gaz selon la revendication 1, **caractérisé en ce que** le cadre de fixation (32) et le coussin à gaz (30) plié forment un ensemble préassemblé.

3. Module de coussin à gaz selon l'une des revendications 1 et 2, **caractérisé en ce que** la source de gaz comprimé (12) et la bande de fixation (18) forment un ensemble préassemblé.

4. Module de coussin à gaz selon l'une des revendications précédentes, **caractérisé en ce que** le cadre de fixation (32) est relié à la bande de fixation (18) par des goujons (36) qui sont immobilisés contre le cadre de fixation (32) et traversent des orifices de maintien du coussin à gaz (30), et **en ce que** le coussin à gaz (30) est immobilisé entre la bande de fixation (18) et le cadre de fixation (32).

5. Module de coussin à gaz selon la revendication 4, **caractérisé par** un couvercle de coussin à gaz (34) qui est pourvu d'orifices de fixation qui sont traversés par les goujons (36).

6. Module de coussin à gaz selon l'une des revendication 4 et 4, **caractérisé en ce que** sur les goujons (36) sont disposées des équerres de montage permettant de fixer le module (10) au véhicule.
